(19) Europäisches Patentamt

European Patent Office

Office européen des brevets

(11) **EP 0 610 996 B1**

(12) **FASCICULE DE BREVET EUROPEEN**

(45) Date de publication et mention
de la délivrance du brevet:
**10.05.2000 Bulletin 2000/19**

(51) Int. Cl.[7]: **G06F 7/49**, G06F 7/52,
G06F 7/72

(21) Numéro de dépôt: **94200269.2**

(22) Date de dépôt: **02.02.1994**

(54) **Dispositif pour effectuer une division**

Gerät zum Ausführen einer Division

Apparatus for performing a division

(84) Etats contractants désignés:
**DE FR GB IT**

(30) Priorité: **08.02.1993 FR 9301357**

(43) Date de publication de la demande:
**17.08.1994 Bulletin 1994/33**

(73) Titulaire:
**Koninklijke Philips Electronics N.V.
5621 BA Eindhoven (NL)**

(72) Inventeurs:
• **Naciri, Robert,
Société Civile S.P.I.D.
F-75008 Paris (FR)**
• **Bournas, Jean Pierre,
Société Civile S.P.I.D.
F-75008 Paris (FR)**

(74) Mandataire: **Chaffraix, Jean et al
Société Civile S.P.I.D.
156, Boulevard Haussmann
75008 Paris (FR)**

(56) Documents cités:
**EP-A- 0 443 679**

• **COMPUTERS & SECURITY. INTERNATIONAL
JOURNAL DEVOTED TO THE STUDY OF
TECHNICAL AND FINANCIAL ASPECTS OF
COMPUTER SECURITY vol. 8, no. 7 , Novembre
1989 , AMSTERDAM NL pages 621 - 630
XP000072275 BONG ET AL 'Optimized Software
Implementations of the Modular Exponentiation
on General Purpose Microprocessors'**

**Description**

La présente invention concerne un dispositif pour effectuer une division d'un nombre dividende A par un nombre diviseur D formé de "n" mots exprimant une base "b", afin d'obtenir un quotient Q et un reste R.

L'invention concerne aussi une carte à puce ou carte à microcircuit munie d'un tel dispositif.

Un tel dispositif trouve d'importantes applications dans les domaines où l'on a affaire à des divisions de grands nombres. Il y a cependant un domaine de prédilection pour l'invention : c'est celui des cartes à microcircuit utilisant le procédé de cryptage RSA. Ce procédé, décrit dans le brevet des Etats Unis d'Amérique publié sous le N° US-A-4405829 de Rivest, Shamir et Adleman en 1978, est un système à clé publique "e". Il repose sur la difficulté de factoriser un grand nombre "N" qui est le produit de deux nombres premiers "p" et "q".

L'opération de base de ce cryptage est définie de la manière suivante.

Le message à coder est mis sous forme d'une chaîne de nombres séparés en blocs M de longueur fixe, inférieurs à N. Chaque bloc donne un cryptogramme C à l'aide d'un exposant "e" qui peut être connu du public et qui est un nombre ne divisant ni "p - 1", ni "q - 1", en effectuant l'opération suivante.

$$C = M^e \ (\text{mod } N)$$

où (mod N) indique que l'opération est effectuée selon un module N.

Pour rétablir le message, le destinataire doit connaître un exposant secret "d" et effectuer l'opération :

$$M = C^d \ (\text{mod } N)$$

c'est à dire :

$$M = M^{de} \ (\text{mod } N)$$

Une grandeur couramment utilisée pour le nombre d'éléments binaires constituant N est 512 ce qui correspond à environ 155 chiffres décimaux, alors on prend pour "p" et "q" une longueur de l'ordre de 256 éléments binaires. Les dispositifs mettant en application ce procédé de cryptage utilisent le Théorème du Reste Chinois qui permet de transformer une exponentielle portant sur 512 éléments binaires en deux exponentielles de 256 éléments relatives à chacun de ces facteurs. Les facteurs "p", "q" sont à leur tour substitués à "N" et les opérations d'exponentiation sont effectuées selon les modules "p" et "q".

Dans la demande de brevet Européen publiée sous le N° EP-A-0 443 679, on décrit la manière dont sont effectuées ces exponentiations. Ces enseignements ont été appliqués au micro-contrôleur 83C852 fabriqué par Philips. Les exponentiations sont effectuées avec des modules qui sont des nombres normalisés. Cette normalisation consiste à réserver trois octets qui sont utilisés dans la suite des calculs. Cette demande propose néanmoins des mesures lorsque les nombres ne sont pas normalisés. Ceci implique pratiquement qu'il faut prévoir deux sortes de processus de calcul une première pour les nombres normalisés et une autre pour les nombres non normalisés. D'une part, cet autre processus est beaucoup moins adapté à la structure dudit micro-contrôleur et amène à un temps de calcul pouvant être long et d'autre part, la présence de deux processus encombre la mémoire de programme.

L'invention trouve là une application importante en rendant possible la normalisation de tous les nombres N proposés. Ceux-ci sont multipliés par un coefficient de normalisation puis une division est effectuée par ce même coefficient à la fin des processus d'exponentiation.

La présente invention propose un dispositif du genre mentionné dans le préambule de la revendication 1 particulièrement bien adapté au micro-contrôleur du type précité qui permet donc d'utiliser des grands nombres quelconques comme module tout en procurant une vitesse de traitement satisfaisante.

Pour cela, le dispositif tel que défini dans la revendication est remarquable en ce qu'il comporte des moyens d'estimation de Q pour effectuer l'opération :

$$A + Q'db_k = Q''.b^{n+k} + S.b^k + R' \ \text{où } db_k = b^{n+k} - D \text{ avec } k \geq 1$$

afin que la valeur S, faisant office de séparateur, devienne nulle pour une valeur de Q' de sorte que Q'' prend la valeur de Q et R', celle de R.

La description suivante, accompagnée des dessins annexés, le tout donné à titre d'exemple non limitatif, fera bien comprendre comment l'invention peut être réalisée.

La figure 1    montre la structure d'un dispositif dans lequel l'invention est mise en application.
La figure 2    montre très schématiquement le fonctionnement de l'invention.

La figure 3 montre l'organigramme de fonctionnement du dispositif selon un mode de réalisation préféré de l'invention.

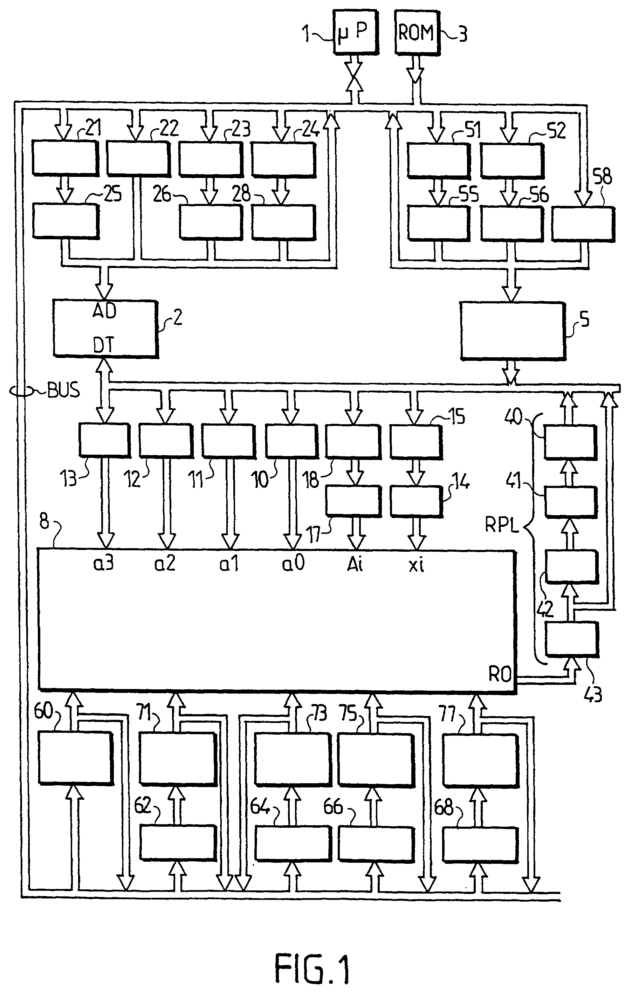

Le dispositif de la figure 1 est constitué à partir d'un microprocesseur 1, d'une mémoire vive 2 munie d'une entrée pour code d'adresse AD et d'un accès pour l'entrée et la sortie des données DT, d'une mémoire morte 3 contenant notamment les instructions de fonctionnement pour la mise en application de l'invention et également d'une mémoire EEPROM 5 pour contenir différentes données, notamment dans le cadre de l'exemple décrit une valeur de normalisation du diviseur $\lambda$ et la valeur $db_k$. Sur cette figure, ces différents éléments sont reliés par une ligne BUS qui fonctionne en mode multiplexé, c'est à dire qu'elle transporte en certains moments des données et en d'autres des codes d'adresses. Le dispositif de la figure 1 comporte aussi une unité de calcul 8 pour effectuer des multiplications avec ou sans cumul. Cette unité 8 comporte un ensemble de quatre entrées a0, a1, a2 et a3 pour recevoir un opérande de quatre octets contenus dans des registres 10, 11, 12 et 13, une entrée $x_i$ reliée à des registres 14 et 15 pour un multiplicande à plusieurs octets, une entrée $A_i$, reliée à des registres 17 et 18 pour plusieurs octets à additionner et une sortie RO pour fournir le résultat. Différents opérandes proviennent de la mémoire vive 2. Selon l'entrée à laquelle ces opérandes sont appliqués, on fait appel à des registres pointeurs 21, 22 et 23. Aux registres 21 et 23 sont associés des organes de décrémentation 25 et 26. Le registre 21 est relatif à l'opérande à appliquer à l'entrée $A_i$, le registre 22, aux opérandes à appliquer aux entrées a1, a2, a3 et a4 et le registre 23, à l'opérande à appliquer à l'entrée "$x_i$". Un autre registre pointeur 24 avec son organe de décrémentation associé 28 est relatif à l'emplacement dans la mémoire 2 pour ranger le résultat fourni à la sortie RO. Des registres 40, 41, 42 et 43 montés en registre de pipe-line RPL, sont prévus pour recevoir aussi des octets disponibles à la sortie RO. D'une manière similaire à la mémoire 2, des registres pointeurs 51 et 52 associés avec des organes de décrémentation 55 et 56 sont rattachés à la mémoire 5. Un registre supplémentaire 58 est aussi utilisé pour l'adressage.

L'unité de calcul 8 est commandée par l'intermédiaire de différents registres 60, 62, 64, 66 et 68. Les registres 71, 73, 75, 77 sont directement gérés par l'unité de calcul 8. Le registre 60 est un registre dans lequel sont emmagasinées des commandes pour l'unité 8 et des informations de statuts concernant les opérations effectuées par cette unité. Le registre 62 est utilisé pour la commande de l'unité de calcul 8. Le registre 64 sert à compter le nombre d'octets du résultat fourni à la sortie RO. Le registre 66 commande le début de l'inscription en mémoire 2 des informations disponibles à la sortie RO et offre la possibilité d'inhiber l'écriture dans la mémoire d'un certain nombre d'octets tandis que le registre 68 est prévu pour fixer les limites des opérandes appliqués aux entrées $A_i$ et $x_i$ c'est-à-dire leur nombre d'octets. Tout détail complémentaire peut être trouvé dans la notice du micro-contrôleur 83C852 précité.

Au moyen de ce dispositif, on propose d'effectuer une division d'un dividende A formé d'un grand nombre "m" d'octets par un diviseur D avec de préférence $n \leq m$. Le résultat que l'on veut obtenir est le quotient Q et le reste R.

Selon l'invention, on a prévu des moyens d'estimation de Q qui effectuent l'opération :

$$A + Q'db_k = Q''.b^{n+k} + S.b^k + R' \tag{1}$$

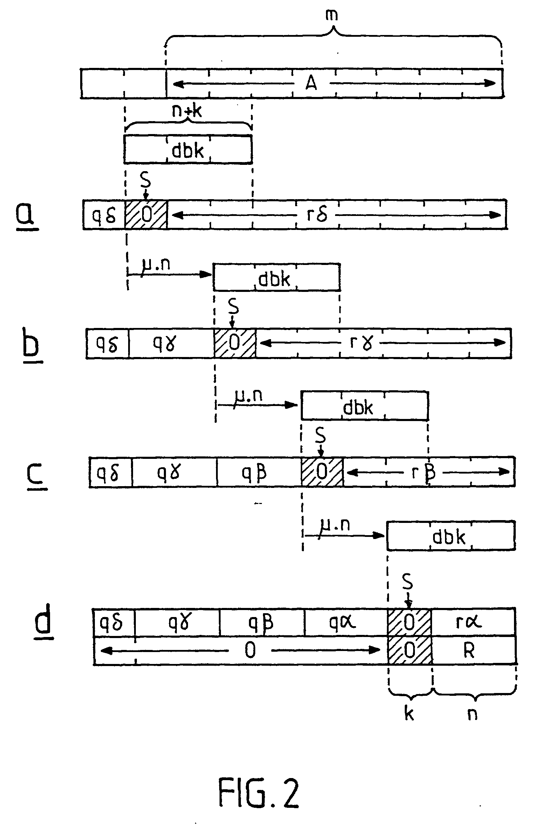

où $db_k = b^{n+k} - D$ avec $k \geq 1$ afin que la valeur S, faisant office de séparateur, devienne nulle pour une valeur de Q' de sorte que Q'' prend la valeur de Q et R', celle de R. Selon un autre aspect de l'invention, on a prévu des emplacements de mémoire déterminés, suffisants pour contenir le dividende A dans lesquels les différentes opérations impliquées par la relation (1) vont être effectuées sans trop nécessiter d'emplacements supplémentaires. Ces opérations vont s'effectuer en multi précision c'est-à-dire en opérant successivement sur des groupes de mots du dividende formé de "m" mots ou, dans le cadre de l'exemple décrit de "m" octets avec des multiples $b^J$ de la quantité $db_k$. On commence par les plus fort poids ce qui revient à multiplier $db_k$ par $b^J$ avec $J = m - n$, donc à le décaler vers les plus forts poids. Le résultat de l'opération (1) sera une valeur Q'' représentant les fort poids du quotient. Cette dernière quantité devient la valeur $q_\delta$ lorsqu'on voit la valeur nulle d'un séparateur S portant sur "k" octets (voir ligne "a" de la figure 2). En pratique, le séparateur est formé d'un seul octet. Puis on recommence ce même processus en décalant la valeur de $db_k$ d'une valeur $\mu.n$ dépendant de la capacité de l'organe de multiplication faisant partie de l'organe de calcul 8. Cette valeur peut prendre la valeur x + y si la multiplication se fait sur des opérandes comprenant "x" et "y" octets. Différentes composantes du quotient $q_\gamma$, $q_\beta$ et $q_\alpha$ apparaissent successivement, ceci est représenté respectivement aux lignes "b", "c" et "d" de la figure 1.

L'invention repose sur les considérations suivantes.

Soit en reprenant la formule de la division :

$$A = Q.D + R \; ; \; 0 \leq R < D$$

où A est le dividende codé sur "m" mots d'une base "b",
où D est le diviseur codé sur "n" mots de la base "b".

Soit k entier $\geq 1$ :
Le complément à D dans

$$Z_{B^{n+k}}$$

est désigné par $db_k$.
On a alors :

$$A + Q.db_k = Q \, b^{n+k} + r$$

Si on considère le format global de l'accumulateur dans lequel se trouve le résultat $A + Q.db_k$, on voit apparaître un séparateur (S) :

| Q | | | | r |
|---|---|---|---|---|
| quotient exact | | k mots nuls | | Reste |

$$(S)$$

Si on commet une erreur d'estimation (par défaut) du quotient exact q :

$$\hat{q} = Q - \delta : \text{quotient estimé.}$$

Alors : $A + \hat{Q}.db_k = Q.b^{n+k} - \delta.db_k + R$

Le séparateur n'est pas nul. Pour déterminer $\delta$, l'erreur d'estimation commise, il suffit d'annuler le séparateur par additions successives de $db_k$ à l'accumulateur. Ce processus peut toutefois être amélioré par l'observation suivante :

- Si $v_0$ est la valeur contenue dans le séparateur,

on alors : $A + \hat{q}.db_k = \alpha_0 b^{n+k} + v_0 b^n + r_0$
En observant que : $db_k = (b^k - 1)b^n + \overline{d_0}$,
où $\overline{d_0}$ représente le complément de D dans un format à n mots ; on a alors par addition de $v_0.db_k$ :

$$A + (\hat{q}+v_0) \, db_k = (\alpha_0 + v_0)b^{n+k} + v_0\overline{d_0} + r_0$$

En posant $v_0\overline{d_0} + r_0 = v_1 b^n + r_1$ on constate que :

a) $v_1 < v_0$ : la valeur dans le séparateur décroît,
b) l'estimation du quotient est plus précise.

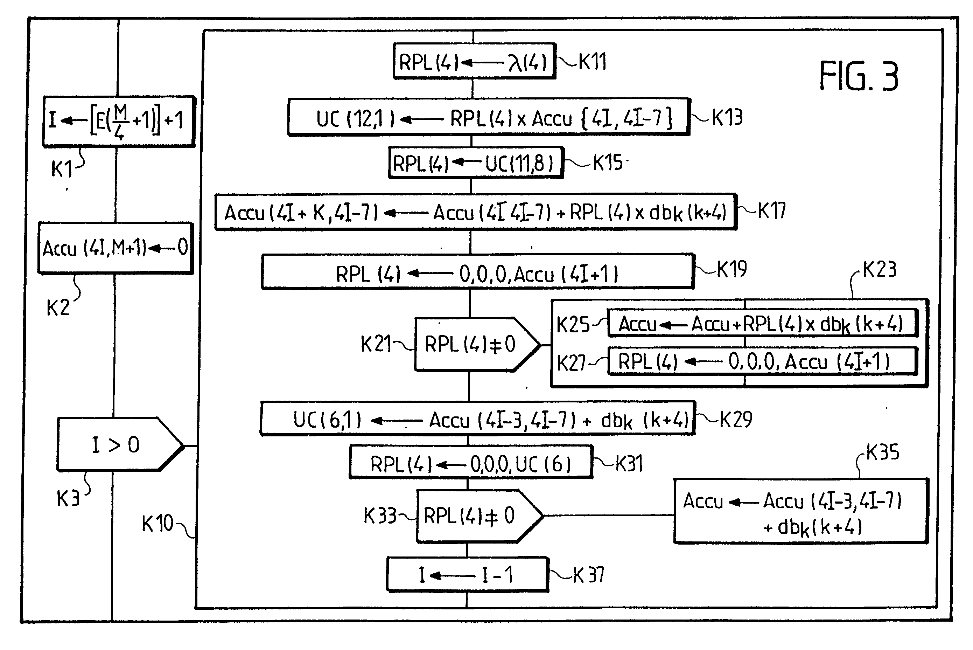

En outre, selon le mode de réalisation préféré de l'invention, un test de signe a été prévu. Il consiste à ajouter la valeur $db_k$ au niveau du séparateur pour qu'il ne puisse pas avoir propagation de la retenue ou autrement dit que l'on s'assure que la composante du quotient n'a pas été trop sous-estimée.
L'organigramme de la figure 3 est représenté selon une norme telle que chaque action est représentée à l'intérieur d'un rectangle. Les cases en forme de pentagone représentent un test, si le test est positif on passe au rectangle inférieur, sinon on passe à la case située à droite. Les différentes cases indiquent des actions explicitées ci-dessous.
Il est supposé que le dividende formé de M octets est situé dans un emplacement de la mémoire 2 référencé dans la suite de l'exposé par Accu {M,1}. Cette notation signifie que les octets placés dans les accolades et séparés par une virgule sont à considérer. Ici, il faut donc considérer l'ensemble des octets depuis M, représentant les plus forts poids jusqu'à l'octet 1, de faible poids. Les M octets Accu {M,1} sont indexés par les registres pointeurs 21 et 24. Il est supposé ensuite que le diviseur, ou mieux la valeur $db_k$, est contenu dans la mémoire EEPROM ; cette valeur est formée de 4 + K octets (K étant le nombre d'octets du séparateur) ; elle est pointée par le registre 52. Il est supposé enfin que le coefficient de normalisation λ du diviseur D est aussi contenu dans la mémoire EEPROM mais il est pointé, lui, par 51. Le coefficient λ est défini par :

$$\lambda = \text{MAX} \{ x \in \mathbb{N} ; x.D \leq b^{n+k} \}$$

où désigne l'ensemble des entiers positifs.

K1 : désigne l'action qui consiste à mettre dans un emplacement de la mémoire 2 faisant office de compteur, une valeur I représentant le nombre de pas de l'algorithme. Pour déterminer ce nombre I on découpe le diviseur en groupe de quatre ce qui correspond à la longueur des multiplicandes convenant à l'opération de multiplication que peut effectuer l'unité de calcul 8.

K2 : c'est l'action qui met à zéro les octets du groupe de 4 restant du côté du plus fort poids. Les registres 23, 21 et 24 pointent vers l'octet Accu {4I-7}.

K3 : on y teste si tous les pas ont été effectués.

K10 : désigne en fait les opérations de la division.

K11 : on met, tout d'abord, les quatre octets du coefficient de normalisation γ, dans les 4 registres RPL ; ces octets transitent dans l'unité 10 au moyen d'une instruction qui commande une multiplication avec un opérande de cumul qui est λ et qui fixe le multiplicateur à une valeur nulle à l'aide du registre 68.

K13 : on multiplie huit des octets (de plus fort poids du dividende lorsqu'on commence au premier pas) contenus dans A{I,4I-7}. Le résultat formé en principe de 12 octets noté ici par : UC {12,1} transitera via le registre RPL.

K15 : de ces 12 octets, on n'en retient que 4 c'est-à-dire UC {11,8}. L'octet de plus fort poids UC {12} est écarté pour avoir un cadrage correct. UC {11,8} est ensuite transféré dans le registre RPL. On notera que les opérations indiquées dans ces cases K11 et K13 ne nécessitent pas la présence de mémoire intermédiaire hors de l'unité de calcul. Ces octets UC {11,8} constituent une valeur du quotient approché $\hat{q}$

K17 : le quotient approché étant disponible dans le registre RPL, on l'utilise pour réduire l'accumulateur par addition de $\hat{q} .db_k$. On notera que le quotient approché apparaîtra dans la mémoire RAM au-delà des K octets de séparation.

K19 : on prélève le séparateur dans Accu pour l'appliquer aux entrées RPL. On notera les 0,0,0 émis avant le séparateur.

K21 : on teste par rapport à zéro la valeur de ce séparateur. Tant que ce séparateur n'est pas nul on effectue les opérations de la case K23 comportant elle-même les cases K25 et K27.

K25 : on multiplie le séparateur par $db_k$ et on l'ajoute au contenu de Accu.

K27 : on prélève à nouveau le séparateur pour l'appliquer à RPL. Cela est effectué tant que le séparateur n'est pas nul.

K29 : on commence le test du signe en ajoutant $db_k$ au contenu de Accu, le résultat est mis dans des emplacements fictifs de travail UC {6,1}, seul en fait sera considéré l'emplacement UC {6} pour la case suivante.

K31 : l'octet de plus fort contenant la valeur de la retenue est remis dans le registre RPL à des fins de test.

K33 : c'est là que l'on effectue ce test, tant que ce contenu est différent de 0, on effectue l'opération indiquée à la case K35.

K35 : on additionne au contenu de Accu la valeur de $db_k$

K37 : on décrémente la valeur de I afin de procéder s'il y a lieu à une exécution supplémentaire de la case K10.

On donne en annexe un exemple de division effectuée dans le système décimal. Soit 99145360 le dividende et 80 le diviseur. La multiplication est supposée être faite sur $2 \times 2$ chiffres, de ce fait on admet implicitement que la capacité du registre RPL est aussi de deux chiffres et le séparateur sur un seul. Le coefficient de normalisation du diviseur est tel $\lambda.D = 960$ donc $\lambda = 12$ et $db_k = 920$.

ANNEXE   1

EXEMPLE  EN  BASE  10  (DECIMAL)

$D$   =   8 0

$db_k$ = 9 2 0                                                    0 0 9 9:1 4 5 3 6 0

$\lambda$ =   1 2

$\hat{q}_0$ = 0099 × 12 = 001:188

$\hat{q}_0 \cdot db_k$ = 920 × 01 = 920  ————————>   9 2 0:: : : :

Test de signe :   0 1 9         1 0 1 9 : : : :
                  9 2 0
                                séparateur

                  $\boxed{0}$ 9 3 9

$\hat{q}_1$ = 1914 × 12 = 022:968         1 0 1 9 1 4 : :

$\hat{q}_1 db_k$ = 920 × 22 =   20240  ————>   2 0 2 4 0 : :

                                        1 2 2 1 5 4 : :

1 × 9 2 0 = 9 2 0  ————————>         9 2 0 : :

Test de signe :   0 7 4         1 2 3 0 7 4 : :
                  9 2 0
                                séparateur

                  $\boxed{0}$ 9 9 4

                                1 2 3 0 7 4 5 3

6

ANNEXE 1   (suite)

D   =   8 0

$db_k$ = 9 2 0                                                                       0 0 9 9:1 4 5 3 6 0

$\lambda$ =   1 2

---

Page précédente -------------------                 1 2 3 0 7 4 5 3 : :

$\hat{q}_2$ = 7453 × 12 = 089:436

$\hat{q}_2 db_k$ = 920 × 89 =   81880         ———>          8 1 8 8 0 : :

                                                                      _____

                                                                       1 2 3 8 9 3 3 3 : :

        ┌──────────────────────────────┐
        ↓
        3 × 9 2 0 = 2 7 6 0   ————>            2 7 6 0 : :

                                                                      _____

Test de signe :    0 9 3                           1 2 3 9 2 0 9 3 : :
                        9 2 0

                        _____

                    [1] 0 1 3        $db_k$ ——>           9 2 0 : :

                                                                      _____

Test de signe :    0 1 3                           1 2 3 9 3 0 1 3 : :
                        9 2 0

                        _____

                    [0] 9 3 3                                           ↓ ↓

        ════════════════════

$\hat{q}_3$ = 1360 × 12 = 016:320              1 2 3 9 3 0 1 3 6 0

$\hat{q}_3 db_k$ = 920 × 16 =   14720         ———>            1 4 7 2 0

                                                                      _____

                                                                       1 2 3 9 3 1 6 0 8 0

ANNEXE 1  (suite)

D   =  8 0

$db_k$ = 9 2 0                                    0 0 9 9:1 4 5 3 6 0
                                                  :: : : : : :
$\lambda$ =  1 2                                   :: : : : : :
                          _____

page précédente ------------------    1 2 3 9 3 1 6 0 8 0
                                                    ⎵
Test de signe :    0 8 0
                   9 2 0
                   _____

                   ⊡ 0 0 0      $db_k$ ——>           9 2 0
                                                  _____

Test de signe :    0 0 0      1 2 3 9 3 1 7 0 0 0
                   9 2 0       ‿‿‿‿‿‿‿‿‿ ⎵ ‿‿‿
                   _____    quotient  séparateur  reste

                   ⊡ 9 2 0

**Revendications**

1. Dispositif pour effectuer une division d'un nombre dividende A formé par ⟨⟨m ⟩⟩ mots par un nombre diviseur formé par ⟨⟨n ⟩⟩ mots, mots formant une base ⟨⟨b ⟩⟩, dispositif destiné à fournir un quotient Q et un reste R, et muni d' au moins :

   - une mémoire pour contenir au moins ⟨⟨m ⟩⟩ mots de dividende A
   - des moyens d'addition pour établir une valeur Q' en effectuant l'opération : $A+Q'db_k$, où $db_k = b^{n+k} - D$ avec k entier supérieur ou égal à 1, jusqu'à faire apparaître une valeur S nulle dans le résultat se présentant sous la forme :

   $$Q''.b^{n+k}+S.b^k+R'$$

   Q'' étant alors la valeur Q et R' la valeur R pour S=0.

2. Dispositif pour effectuer une division, selon la revendication 1, du nombre dividende A formé de "m" mots exprimant une base "b", par le diviseur D, comportant une mémoire vive, un organe de multiplication muni d'une première entrée pour "x" mots d'un multiplicande, d'une deuxième entrée pour "y" mots d'un multiplicateur, caractérisé en ce que ladite mémoire vive comporte des emplacements déterminés pour contenir au moins les "m" mots du dividende, en ce qu'il est prévu des moyens de cumul pour ajouter à ces emplacements un multiple d'une quantité $db_k.b^J$ élaborée par ledit organe de multiplication, des moyens de test pour fournir une indication de la valeur nulle d'un séparateur S défini par "k" et par "J" dans ledit emplacement et pour activer des moyens de cumuls jusqu'à ce que les moyens de test fournissent ladite indication et des moyens de décrémentation pour décrémenter la valeur J de x + y à chaque indication et en ce qu'à la fin de la décrémentation le reste de la division est contenu dans les "n" derniers emplacements et le quotient avant le "n+k" ième emplacement à la fin de la décrémentation de "J".

3. Dispositif pour effectuer une division selon la revendication 2, caractérisé en ce que les moyens de test effectuent une phase de vérification consistant à rajouter une quantité $db_k.b^J$ à la quantité contenue dans des parties dudit emplacement définies par J, à examiner si ce rajout fournit une retenue et à rajouter effectivement cette quantité $db_k.b^J$ si une retenue a été fournie.

**4.** Carte à puce munie d'un dispositif selon l'une des revendications 1 à 3.

**Claims**

**1.** A device for carrying out a division of a dividend A formed by "m" words by a divisor D formed by "n" words expressing a base "b" so as to obtain a quotient Q and a remainder R, which device is provided with at least:

- a memory for holding at least "m" words forming the dividend A
- addition means for obtaining a value Q' by carrying out the operation:

$$A+Q'db_k < Q''.b^{n+k}+S.b^k+R'>$$

in which $db_k = b^{n+k}-D$ with $k \geq 1$, until the value S becomes zero in the result which can be written as: Q'' taking the value of Q and R' the value of R for S=0.

**2.** A device for carrying out a division, as claimed in Claim 1, of the dividend A formed by "m" words with a base "b" by the divisor D, comprising a active memory, a multiplication member provided with a first input for "x" words of a multiplicand and with a second input for "y" words of a multiplier, characterized in that the said active memory comprises locations set aside for containing at least the "m" words of the dividend, in that accumulating means are provided for adding at these locations a multiple of a quantity $db_k.b^J$ worked out by the said multiplication member, testing means are provided for providing a indication of the zero value of a separator S defined by "k" and by "J" in the said location and for activating the accumulating means until the said testing means provide the said indication, and decrementation means are provided for decrementing the value J by x+y at each indication, and in that at the end of the decrementation operation the remainder of the division is contained in the "n" last locations and the quotient is present in front of the "n+k"th location at the end of the decrementation of "J".

**3.** A device for carrying out a division as claimed in Claim 2, characterized in that the testing means are active in a verification phase by adding a quantity $db_k.b^J$ to the quantity contained in the portions of the said location defined by J in order to examine whether this addition provides a carry-over and to actively add this quantity $db_k.b^J$ if a carry-over is indeed the result.

**4.** A smart card provided with a device as claimed in ay of Claims 1 to 3.

**Patentansprüche**

**1.** Gerät zum Ausführen einer Division eines Dividenden A, gebildet von "m" Wörtern, durch einen Divisor, gebildet von "n" Wörtern, wobei die Wörter eine Basis "b" bilden und das Gerät vorgesehen ist, um einen Quotienten Q und einen Rest R zu liefern und mindestens versehen ist mit:

- einem Speicher zum Enthalten von mindestens "m" Dividenden A
- Addiermitteln zum Aufstellen eines Wertes Q' mit dem Durchführen der Operation: $A+Q'db_k$, wobei $db_k = b^{n+k} - D$, mit k Ganzzahl größer oder gleich 1, bis zum Auftreten eines Werts S Null, in dem sich folgendermaßen darstellenden Ergebnis:

$$Q''.b^{n+k}+S.b^k+R',$$

wobei Q'' dann der Wert Q und R' des Wertes R für S=0 ist.

**2.** Gerät zum Ausführen einer Division des Dividenden A nach Anspruch 1, gebildet aus "m" Wörtern, die für eine Basis "b" stehen, durch den Divisor D, versehen mit einem aktiven Speicher, einem Multiplikationsorgan, versehen mit einem ersten Eingang für "x" Wörter eines Multiplikanden, einem zweiten Eingang für "y" Wörter eines Multiplikanden, dadurch gekennzeichnet, daß der besagte aktive Speicher bestimmte Plätze enthält, um mindestens die "m" Wörter des Dividenden zu enthalten und mit Kumulationsmitteln versehen ist, um diesen Plätzen ein Vielfaches einer Menge $db_k.b^J$ hinzuzufügen, von dem besagten Multiplikationsorgan erarbeitet, Testmitteln, um eine Angabe des Werts Null eines Separators S zu machen, von "k" und von "J" an dem besagten Platz definiert, und zum Aktivieren der Kumulationsmittel, bis die besagten Testmittel die besagte Anzeige liefern, und Dekrementierungsmitteln, um den Wert J von x + y bei jeder Anzeige zu dekrementieren, und daß am Ende der Dekrementierung der Rest der Division an den "n" letzten Plätzen enthalten ist und der Quotient vor dem "n+k"-ten Platz am Ende der Dekrementierung von "J".

3.  Gerät zu Ausführen einer Division nach Anspruch 2, dadurch gekennzeichnet, daß die Testmittel eine Prüfphase durchführen, die darin besteht, eine Menge $db_k.b^J$ zu der in den Teilen des von J definierten Platzes enthaltenen Menge hinzuzufügen und zu prüfen, ob dieser Zusatz einen Übertrag liefert und diese Menge $db_k.b^J$ tatsächlich hinzuzufügen, wenn ein Übertrag geliefert wurde.

4.  Mit einem Gerät nach den Ansprüchen 1 bis 3 versehene Chipkarte.

FIG.1

FIG. 2

EP 0 610 996 B1

FIG. 3

$I \leftarrow [E(\frac{M}{4}+1)]+1$ ~K1

$Accu\,(4I,M+1) \leftarrow 0$ ~K2

$I > 0$ ~K3

$RPL(4) \leftarrow \lambda(4)$ ~K11

$UC\,(12,1) \leftarrow RPL(4) \times Accu\,\{4I,4I-7\}$ ~K13

$RPL(4) \leftarrow UC(11,8)$ ~K15

$Accu\,(4I+K,4I-7) \leftarrow Accu\,(4I,4I-7) + RPL\,(4) \times db_k\,(k+4)$ ~K17

$RPL(4) \leftarrow 0,0,0,Accu\,(4I+1)$ ~K19

~K23

$RPL(4) \neq 0$ ~K21

K25~ $Accu \leftarrow Accu + RPL(4) \times db_k\,(k+4)$

K27~ $RPL(4) \leftarrow 0,0,0,Accu\,(4I+1)$

$UC(6,1) \leftarrow Accu\,(4I-3,4I-7) + db_k\,(k+4)$ ~K29

$RPL(4) \leftarrow 0,0,0,UC\,(6)$ ~K31

~K35

K10~

K33~ $RPL(4) \neq 0$

$Accu \leftarrow Accu\,(4I-3,4I-7) + db_k\,(k+4)$

$I \leftarrow I-1$ ~K37